# EUROPÄISCHE PATENTANMELDUNG

(11) **EP 4 332 425 A1**
(43) Veröffentlichungstag der Anmeldung: **06.03.2024**
(21) Anmeldenummer: 22020420.0
(22) Anmeldetag: 01.09.2022
(51) Int. Cl.: F17C 5/06

(54) **ANLAGE ZUM VERDICHTEN, SPEICHERN UND BEREITSTELLEN VON GAS UND UND ENTSPRECHENDES VERFAHREN**

(71) Anmelder: Linde GmbH, 82049 Pullach (DE)
(72) Erfinder: Fahrner, Daniel, 82049 Pullach (DE); Vidic, Karl Jojo, 82049 Pullach (DE); Schwab, Daniel, 82049 Pullach (DE)
(74) Vertreter: Zahn, Christoph

(57) **Zusammenfassung**

Die Erfindung betrifft eine Anlage (100) zum Verdichten, Speichern und Bereitstellen von Gas, insbesondere Wasserstoff, aufweisend eine Verdichtungseinrichtung (140), eine Speichereinrichtung (120), eine Expansionsmaschine (26) und eine Kältemaschine (32), insbesondere eine Absorptionskältemaschine, wobei die Anlage (100) eingerichtet ist, erhaltenes Gas (a) mittels der Verdichtungseinrichtung (140), insbesondere mehrstufig, zu verdichten, und das verdichtete Gas (b) in der Speichereinrichtung (120) zu speichern, wobei die Anlage (100) eingerichtet ist, die Verdichtungseinrichtung (140) unter Verwendung der Kältemaschine (32) und der Expansionsmaschine (26) zu kühlen.

## Beschreibung

Die Erfindung betrifft ein Anlage zum Verdichten, Speichern und Bereitstellen von Gas, insbesondere Wasserstoff, sowie ein Verfahren zum Betreiben einer solchen Anlage, z.B. einer Wasserstofftankstelle.

Wasserstoff, der z.B. als Treibstoff für Fahrzeuge verwendet wird, kann über sog. Wasserstofftankstellen bereitgestellt werden. Es können zwei Arten von Wasserstofftankstellen unterschieden werden. Die erste Art nutzt flüssigen Wasserstoff als Quelle und verdichtet den Wasserstoff flüssig, d.h. in flüssiger Form. Die zweite Art hingegen hat eine gasförmige Wasserstoffquelle und verdichtet den Wasserstoff gasförmig, d.h. der Wasserstoff wird zumindest zunächst gasförmig erhalten und auch gasförmig verdichtet. Zudem können bei einer Wasserstofftankstelle zwei grundlegende Systembereiche unterschieden werden. Der erste Systembereich betrifft die Verdichtung des Wasserstoffes, dessen Speicherung sowie dessen Konditionierung und Kühlung. Der zweite Systembereich umfasst einen Wasserstoffdispenser und das dazugehörige Betankungsequipment wie beispielsweise Abreiß- und Betankungskupplung sowie den Betankungsschlauch.

Bei Wasserstofftankstellen zweiter Art oder vergleichbaren Anlagen sind in der Regel erhebliche Mengen an Energie nötig, um bei der Verdichtung freiwerdende Wärme abzuführen bzw. wegzukühlen. Vor diesem Hintergrund stellt sich die Aufgabe, das Verdichten von Gas bzw. den Betrieb einer entsprechenden Anlage möglichst energieeffizient zu gestalten.

### Offenbarung der Erfindung

Diese Aufgabe wird durch eine Anlage zum Verdichten, Speichern und Bereitstellen von Gas sowie ein Verfahren zum Betreiben einer solchen Anlage mit den Merkmalen der unabhängigen Patentansprüche gelöst. Bevorzugte Ausgestaltungen sind Gegenstand der abhängigen Patentansprüche sowie der nachfolgenden Beschreibung.

### Vorteile der Erfindung

Die Erfindung beschäftigt sich mit dem Verdichten, Speichern und Bereitstellen von Gas sowie entsprechenden Anlagen und deren Betrieb. Wie eingangs erwähnt, kommen insbesondere Wasserstofftankstellen als solche Anlagen in Betracht. Nachfolgend soll die Erfindung daher insbesondere in Bezug auf Wasserstofftankstellen beschrieben werden, grundsätzlich lässt sich das Prinzip aber auch auf andere Anlagen zum Verdichten von Gas, z.B. mit anderen Arten von Gasen, oder auch für andere Verwendungszwecke, übertragen.

Wie erwähnt, können zwei Arten von Wasserstofftankstellen unterschieden werden. Die erste Art nutzt flüssigen Wasserstoff als Quelle und verdichtet den Wasserstoff flüssig, d.h. in flüssiger Form. Die zweite Art hingegen hat eine gasförmige Wasserstoffquelle, d.h. erhält den Wasserstoff gasförmig, und verdichtet den Wasserstoff gasförmig. Die vorliegende Erfindung beschäftigt sich dabei mit der zweiten Art von Wasserstofftankstellen bzw. allgemein dem Verdichten, Speichern und Bereitstellen von Gas.

Dabei können bei einer Wasserstofftankstelle zwei grundlegende Systembereiche unterschieden werden. Der erste Systembereich betrifft die Verdichtung des Wasserstoffes, dessen Speicherung sowie dessen Konditionierung und Kühlung. Der zweite Systembereich umfasst die Bereitstellung für die konkrete Verwendung, also z.B. einen Wasserstoffdispenser und das dazugehörige Betankungsequipment wie beispielsweise Abreiß- und Betankungskupplung sowie den Betankungsschlauch. Die vorliegende Erfindung betrifft hiervon insbesondere den ersten Systembereich, dort wiederum insbesondere das Verdichten, aber auch Speicherung sowie ggf. Konditionierung und Kühlung von Gas.

Bei einer Wasserstofftankstelle zweiter Art wird Wasserstoff in der Regel mehrstufig (typischerweise zwischenstufen- sowie zylindermantelgekühlt) auf bis zu 1000 bar verdichtet und in Mittel- und/oder Hochdruckbanken bei z.B. zwischen 500 und 1000 bar gespeichert. Beim Betanken eines Fahrzeugs am Dispenser der Wasserstofftankstelle wird das Gas in der Regel über einen sog. Druckrampenregler betreffend Druck und Massenstrom gezielt vorkonditioniert. Um wasserstoffbetriebene Fahrzeuge entsprechend den gängigen Normen (z.B. SAE J2601, JPEC-S0003,

Phryde-Protokoll oder CEP-Protokoll) mit Wasserstoff zu betanken, ist es in aller Regel erforderlich, das Gas (Wasserstoff) vor dem Betankungsvorgang auf Temperaturen von bis zu 233,15 K (bzw. -40°C) vorzukühlen. In den relevanten Temperaturbereichen erwärmt sich gasförmiger Wasserstoff, aufgrund des negativen Joule-Thomson Effekts, im Zuge einer isenthalpen Entspannung. Da bei einer Betankung ein Druckgefälle (dies ist wiederum eine isenthalpe Entspannung) durch Überströmen zwischen der Tankstelleninfrastruktur und dem Fahrzeugtank vorliegt, werden Wasserstofftankstellen typischerweise mit Kühlsystemen ausgestattet, die zumeist aus einer Kompressionskältemaschine und einem Wasserstoff- bzw. Gas-Wärmeübertrager bestehen, wobei auch unterschiedliche Kältespeicherkonzepte zu Einsatz kommen.

Die bereits genannten Zwischenstufen (eine Stufe entspricht z.B. einem Zylinder mit einer gegebenen Druckstufe bei einem gegebenen Verdichtungsverhältnis) können z.B. entweder über Wasser/Luft- oder Wassergemisch/Luft-Wärmetauscher auf eine der Umgebungstemperatur nahe Temperatur abgekühlt werden. Die Kühlung kann auch durch den Einsatz einer sprühwasserunterstützten Kühlung mit Wasser/Luft-Rückkühlern (sofern genügend Wasser mit ausreichender Qualität vorhanden ist) realisiert werden, welche dadurch auf Feuchtkugeltemperatur gehalten werden können, oder z.B. auch durch den Einsatz von sogenannten Kaltwassersätzen. Diese Kaltwassersätze umfassen dabei typischerweise Kompressionskältemaschinen, die einen Kaltwasserkreis aufrechterhalten, der in den Kühlkreis der Zwischenstufenkühlung eingebunden ist und diesen daher abkühlt.

Um die bei der Betankung eines wasserstoffgetriebenen Fahrzeugs am jeweiligen Expansionspunkt (z.B. am Druckrampenregler) sowie die bei einer mehrstufigen Verdichtung von gasförmigem Wasserstoff freiwerdende Wärme weg zu kühlen, sind erhebliche Energiemengen notwendig, wobei je nach System unterschiedliche Zieltemperaturen des Wasserstoffs erforderlich sein können. Dies benötigt zusätzliche Energieressourcen und erhöht daher den spezifischen Energieverbrauch der Anlage wie z.B. der Wasserstofftankstelle massiv. Global ist aufgrund des Klimawandels ein Temperaturanstieg zu beobachten, welcher die thermische Belastbarkeit von Wasserstofftankstellen zusätzlich in Anspruch nimmt, da es somit zu erhöhten Verschleißerscheinungen kommen kann.

Vor diesem Hintergrund wird vorgeschlagen, bei einer Anlage zum Verdichten, Speichern und Bereitstellen von Gas, insbesondere Wasserstoff, welche Anlage eine Verdichtungseinrichtung und eine Speichereinrichtung aufweist, und die eingerichtet ist, erhaltenes Gas mittels der Verdichtungseinrichtung, insbesondere mehrstufig, zu verdichten, und das verdichtete Gas in der Speichereinrichtung zu speichern, auch eine Expansionsmaschine und eine Kältemaschine, und zwar insbesondere eine Absorptionskältemaschine, vorzusehen. Die Anlage ist dann zudem eingerichtet, die Verdichtungseinrichtung, z.B. einen mehrstufigen Kolbenverdichter, unter Verwendung der Kältemaschine und der Expansionsmaschine zu kühlen. Als Expansionsmaschine kommt dabei jede Art von Vorrichtung oder Maschine in Betracht, die Gas durch Expansion abkühlt bzw. abkühlen kann. Die Kältemaschine im Falle der Absorptionskältemaschine kann z.B. mit Ammoniak als Arbeitsmedium (Kühlmittel) im gewünschten Temperaturbereich arbeiten. Die Verwendung von Expansionsmaschine und Kältemaschine erlaubt eine besonders effiziente Kühlung der Verdichtungseinrichtung bzw. des Verdichters, insbesondere auch bei verschiedenen Betriebsphasen der Anlage. Anstelle einer Absorptionskältemaschine könnte auch eine Adsorptionskältemaschine verwendet werden.

Vorzugsweise weist die Anlage weiterhin eine erste Kältespeichereinrichtung (z.B. einen Kältespeicher) auf, und ist eingerichtet, das gespeicherte Gas aus der Speichereinrichtung über die Expansionsmaschine und nachfolgend die erste Kältespeichereinrichtung zu führen. Da das Gas durch die Expansion abgekühlt wird, kann auf diese Weise mittels der Expansionsmaschine die erste Kältespeichereinrichtung bzw. ein Kühlmittel darin abgekühlt werden. Über einen Kühlmittelstrom von der ersten Kältespeichereinrichtung zu einer oder mehreren Gehäusekomponenten der Verdichtungseinrichtung, insbesondere Einlässe für das Gas und/oder einen Antrieb, können dann z.B. diese Gehäusekomponenten gekühlt werden. Da die erste Kältespeichereinrichtung mittels der Expansionsmaschine gekühlt wird, können auf diese Weise auch die Verdichtungseinrichtung oder zumindest Teile davon mittels der Expansionsmaschine gekühlt werden.

Vorzugsweise weist die Anlage weiterhin eine zweite Kältespeichereinrichtung auf, und ist eingerichtet, das gespeicherte Gas aus der Speichereinrichtung direkt (also nicht über eine weitere Maschine wie z.B. die Expansionsmaschine; etwaige Ventile und dergleichen bleiben hier jedoch außenvor) über die zweite Kältespeichereinrichtung zu führen.

Die Anlage kann dann zudem eingerichtet sein, das Gas mittels der ersten Kältespeichereinrichtung auf eine andere, insbesondere geringere, mittlere Temperatur, zu kühlen als mittels der zweiten Kältespeichereinrichtung, und insbesondere Gasströme nach der ersten Kältespeichereinrichtung und der zweiten Kältespeichereinrichtung zu vermischen (bzw. zu vereinen), um das Gas mit einer gewünschten Temperatur bereitzustellen, z.B. an einer Bereitstellungseinrichtung wie einem Dispenser. Diese zweite Kältespeichereinrichtung wird dabei bevorzugt über einen Kühlmittelstrom von der Kältemaschine, insbesondere von einem kalten Ausgang der Kältemaschine, gekühlt.

Die Anlage ist vorteilhafterweise auch eingerichtet, je nach Bedarf das gespeicherte Gas aus der Speichereinrichtung wahlweise über die Expansionsmaschine und nachfolgend die erste Kältespeichereinrichtung, direkt über die zweite Kältespeichereinrichtung, oder über die Expansionsmaschine und nachfolgend die erste Kältespeichereinrichtung und zudem direkt über die zweite Kältespeichereinrichtung zu führen, z.B. in einem gewünschten Aufteilungsverhältnis, und für eine Verwendung zur Verwendung bereitzustellen, insbesondere über die Bereitstellungseinrichtung der Anlage. Dies erlaubt es, die Temperatur des Gases je nach Bedarf einzustellen.

Vorzugsweise ist die Anlage eingerichtet, die eine oder die mehreren Gehäusekomponenten der Verdichtungseinrichtung weiterhin über einen Kühlmittelstrom von der Kältemaschine zu kühlen, insbesondere durch Zumischung von Kühlmittel in den Kühlmittelstrom der ersten Kältespeichereinrichtung, weiter insbesondere nach Kühlung der zweiten Kältespeichereinrichtung. Diese Zumischung erlaubt eine größere Variabilität und Genauigkeit bei der Kühlung.

Besonders bevorzugt weist die Verdichtungseinrichtung mehrere Verdichterstufen zum mehrstufigen Verdichten des Gases auf; dies können z.B. mehrere Stufen in Form eines mehrstufigen Kolbenverdichters sein. Die Anlage ist dann eingerichtet, Gas zwischen zwei Verdichterstufen und/oder zwischen einer letzten Verdichterstufe und der Speichereinrichtung über einen Kühlmittelstrom der Kältemaschine zu kühlen, der im Rücklauf der Kältemaschine, insbesondere einem warmen Eingang der Kältemaschine, zugeführt wird. Hierzu können z.B. geeignete Wärmetauscher nach jeder Verdichterstufe vorgesehen sein. Damit kann das Temperaturniveau am Eingang der Kältemaschine hoch gehalten werden, um eine hohe Effizienz zu erreichen.

Bei einer Inbetriebnahme der Anlage kann die Kältemaschine temporär zwangsbeheizt werden, um die erste Kältespeichereinrichtung abzukühlen. Außerdem kann die zweite Kältespeichereinrichtung, bei einer Inbetriebnahme der Anlage, durch Betankung in einem externen Speichertank oder in die Speichereinrichtung bzw. dort eine oder mehrere Speicherbanken abgekühlt werden. Auf diese Weise kann ein Betriebszustand hergestellt werden.

Ein besonderer Vorteil des vorgeschlagenen Konzepts liegt in einer Wirkungsgraderhöhung des Gesamtsystems bzw. der Anlage und einer Verlängerung der Lebensdauer der Anlage. Folglich wird signifikant weniger elektrische Energie für die Kühlung benötigt, sondern zum Teil auch durch die Expansionsmaschine erzeugt, was den ökologischen Fußabdruck der Anlage signifikant verringert (keine Kältemittel mit hohem GWP, "Global Warming Potential", geringerer Stromverbrauch) und den spezifischen Energieverbrauch der Anlage erheblich senkt. Dies stellt einen großen Vorteil für den Endkunden aber auch für den Wasserstoffsektor gesamtheitlich dar. Ein weiterer Vorteil stellt sich durch die Lebensdauerverlängerung der Verdichtungseinrichtung, dort z.B. von Gaszylinder-Kolben-Einheiten (im Speziellen der Stufendichtungen aus Polymeren) ein, da diese auf optimale Temperaturen heruntergekühlt werden können (z.B. auf unter 50°C Gaseintrittstemperatur in die jeweilige Zylinderstufe).

Gleichzeitig wird Kälte erzeugt und somit eine optimierte Kühlung der Antriebseinheit der Verdichtungseinrichtung bereitgestellt. Durch die Verwendung einer Kältemaschine und einer Expansionsmaschine können thermische Lastschwankungen der Anlage durch zufällig verteilte, stochastische Betankungsprofile, bei schwankenden Umgebungstemperaturen und variablen Verdichterdrehzahlen sowie Verdichterlaufzeiten, sehr gut abgedeckt werden, was wiederum den Vorteil konstanter Zieltemperaturen der zu kühlenden Komponenten und Medien bedeutet.

Die Erfindung ist anhand eines Ausführungsbeispiels in der Zeichnung schematisch dargestellt und wird im Folgenden unter Bezugnahme auf die Zeichnung beschrieben.

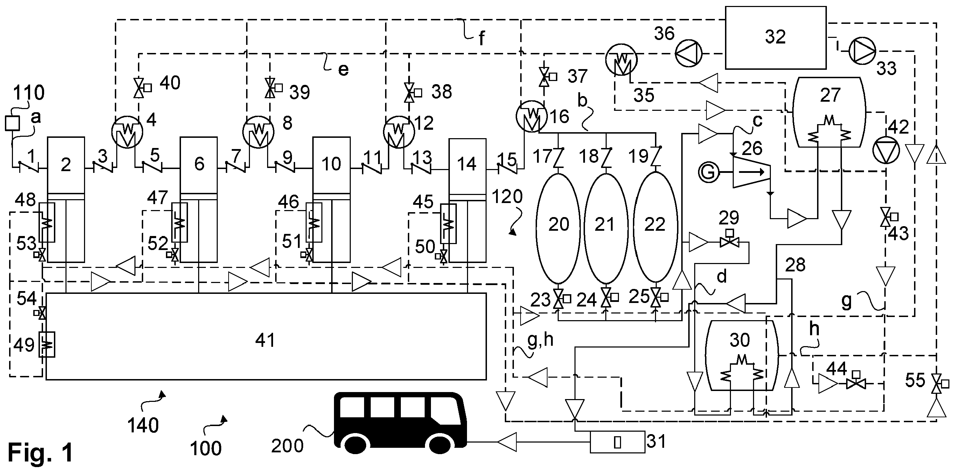

Kurze Beschreibung der Zeichnung
- Figur 1: zeigt schematisch eine erfindungsgemäße Anlage in einer bevorzugten Ausführungsform.

### Ausführliche Beschreibung der Zeichnung

In Figur 1 ist schematisch eine erfindungsgemäßen Anlage 100 in einer bevorzugten Ausführungsform dargestellt, mittels welcher auch ein erfindungsgemäßes Verfahren durchführbar ist. Hierbei ist insbesondere ein konkretes Beispiel für eine als Wasserstofftankstelle ausgebildete Anlage 100 mit Kolbenverdichter als Verdichtungseinrichtung 140 und eine beispielhaft drei Speicherbanken 20, 21, 22 umfassende Speichereinrichtung 120 gezeigt. Ein Antrieb 41 des Kolbenverdichters 140 kann z.B. sowohl mechanisch, hydraulisch als auch pneumatisch ausgeführt sein kann.

In dem in Figur 1 dargestellten Fall einer Betankung eines Fahrzeugs 200 mit laufendem Verdichter (Verdichtungseinrichtung 140) und höherem Wasserstoff-Massenstrom als verdichtetem Wasserstoff-Massenstrom, wird die Anlage 100 aus einer Quelle 110 wie beispielsweise einer Elektrolyse, einer Pipeline, einem Trailer oder einem vergleichbaren System mit Wasserstoff, hier als Strom a gezeigt, versorgt. Es versteht sich, dass in aller Regel zwischen der Quelle 110 und dem Kolbenverdichter 140 noch verschiedene Komponenten oder Einbauten vorgesehen oder auch notwendig sein können (z.B. Eingangspuffer, Druckregler, Sensorik, etc.), die hier jedoch nicht gezeigt und für die vorliegende Erfindung auch nicht weiter relevant sind.

Der erhaltene Wasserstoff a tritt dann z.B. über ein Rückschlagventil 1 in den mehrstufigen Kolbenverdichter 140 bzw. dort eine erste Kolbeneinheit 2 ein. Der Verdichter bzw. der Kolbenverdichter 140 selbst kann z.B. vier (wie hier gezeigt), jedoch auch mehr oder weniger Stufen aufweisen. Diese Stufen repräsentieren beispielhaft Gaszylinder-Kolben-Einheiten 2, 6, 10 und 14, die z.B. jeweils am gasseitigen Ein- und Ausgang Rückschlagventile 1, 3, 5, 7, 9, 11, 13, 15 aufweisen. Die Gaszylinder-Kolben-Einheiten können auch doppelwirkend ausgeführt sein.

Zwischen denjenigen Rückschlagventilen, welche sich zwischen den Stufen befinden (Rückschlagventile 3, 5, 7, 9, 11, 13) aber auch nach der letzten Stufe (Rückschlagventil 15; in Sonderfällen z.B. auch Rückschlagventil 1) wird der Wasserstoff auf eine für die Dichtungssysteme der Gaszylinder-Kolben-Einheiten und/oder anderer Komponenten wie z.B. jener der Speicherbanken 20, 21, 22 der Speichereinrichtung 120 verträgliche Temperatur mittels Wärmetauscher 4, 8, 12, 16 abgekühlt, z.B. auf unter 50°C.

Nach der Abkühlung und Verdichtung tritt der Wasserstoff, hier Strom b, in die jeweils zu befüllende Speicherbank 20, 21, 22 ein, z.B. über Rückschlagventile 17, 18, 19. Die Anzahl der Speicherbanken kann je nach Anlage bzw. Tankstellenlayout variieren. Eine Kaskadenbetankung des Fahrzeuges 200 wird dann z.B. durch das Öffnen und Schließen der Ventile 23, 24 und 25 (die den Speicherbanken 20, 21, 22 zugeordnet sind) gesteuert.

Verlässt das Gas die aktive Speicherbank, so strömt dieses als Strom c entweder über eine Expansionsmaschine 26, die das Gas abkühlt und zugleich die Druckrampe durch eine generatorische Bremse regelt (der dabei erzeugte Strom kann z.B. in das Stromnetz eingespeist oder on-site verwendet werden) oder das Gas fließt als Strom d z.B. über ein Bypassventil 29, welches zugleich einen Druckrampenregler darstellt und direkt anschließend in einer zweiten Kältespeichereinrichtung 30 bzw. einem zweiten Kältespeicher auf eine mittlere Temperatur von z.B. min.. -33 °C abkühlt. Jenes Gas, das durch die Expansionsmaschine 26 geströmt ist und nicht über den Bypass 29 geführt wird, also Strom c, gelangt in eine erste Kältespeichereinrichtung 27 bzw. einen ersten Kältespeicher, der auf geringer mittlerer Temperatur gehalten wird, z.B. von max. -41 °C.

Ein Kältemittel (oder Kältespeichermedium oder Kälteträgermedium) für die erste Kältespeichereinrichtung 27 und/oder die zweite Kältespeichereinrichtung 30 ist z.B. ein Gemisch aus Wasser, Frostschutz (z.B. Ethylenglycol) oder Sole (z.B. Kaliumformiat und Wasser) sowie einem korrosionsinhibierenden Medium und das durch die jeweilige Kältespeichereinrichtung strömende Gas (Wasserstoff) tauscht die Wärme des Kältemittels in der jeweiligen Kältespeichereinrichtung z.B. über einen darin positionierten Wärmetauscher aus.

Um einen gewünschten Zieltemperaturbereich von z.B. -33 bis -40°C an einer Bereitstellungseinrichtung 31 wie z.B. einem Dispenser zu gewährleisten, können die beiden Teilströme c und am Punkt 28 miteinander vermischt bzw. vereinigt werden.

Die Abwärme, insbesondere die gesamte Abwärme, der Verdichtungseinrichtung 140 wird über die Kältemaschine, hier eine Absorptionskältemaschine 32, und die Expansionsmaschine 26 bzw. unter deren Verwendung in nutzbare Kälte und nutzbare Energie umgewandelt.

Die Verdichtungseinrichtung 140 ist hier, wie erwähnt, beispielhaft als Kolbenverdichter mit vier Stufen bzw. Verdichtungsstufen (die Gaszylinder-Kolben-Einheiten 2, 6, 10, 14) ausgebildet. Diese Gaszylinder-Kolben-Einheiten werden z.B. mittels des gemeinsamen Antriebs 41 angetrieben. Zwischen jeweils zwei Verdichterstufen sowie zwischen einer letzten Verdichterstufe (Gaszylinder-Kolben-Einheit 14) und der Speichereinrichtung 120 wird das Gas (von Strom a) jeweils über einen Wärmetauscher 4, 8, 12, 16 geführt.

Das dort strömende Gas, also das Gas zwischen zwei Verdichterstufen und zwischen einer letzten Verdichterstufe und der Speichereinrichtung 120, wird nun über einen Kühlmittelstrom e der Absorptionskältemaschine 32 zu kühlen, der im Rücklauf f der Absorptionskältemaschine 32, insbesondere einem warmen Eingang der Absorptionskältemaschine, zugeführt wird. Hierzu wird mittels einer Pumpe 36 das Kühlmittel zu jedem der Wärmetauscher 4, 8, 12, 16 geführt; mittels der Ventile 37, 38, 39, 40 kann der Fluss des Kühlmittels z.B. eingestellt bzw. geregelt werden. Die Wärmetauscher 4, 8, 12, 16 sind hier beispielhaft parallel verschaltet.

Außerdem weist die Verdichtungseinrichtung 140 verschiedene Gehäusekomponenten oder Komponenten auf, die ebenfalls Abwärme erzeugen, die weggekühlt wird. Beispielsweise sind dies die Gaszylinder-Kolben-Einheiten bzw. dort insbesondere Einlässe für das Gas oder die Zylindermäntel. Eingangsseitig können hier z.B. Temperaturen von mehr als 150°C auftreten. Dort sind beispielhaft die Wärmetauscher 45, 46, 47, 48 vorgesehen. Eine weitere Komponente, die hohe Abwärme erzeugt, ist z.B. der Antrieb 41. Dort ist beispielhaft der Wärmetauscher 49 vorgesehen. Um diese Komponente zu kühlen, wird nun ein Kühlmittelstrom g mittels einer Pumpe 42 von der ersten Kältespeichereinrichtung 27 (die, wie erwähnt, über die Expansionsmaschine 26 gekühlt wird) zu den betreffenden Gehäusekomponenten bzw. dort den Wärmetauschern 45, 46, 47, 48, 49 geführt, mittels der Ventile 50, 51, 52, 53, 54 kann der Fluss des Kühlmittels z.B. eingestellt bzw. geregelt werden. Die Wärmetauscher 45, 46, 47, 48, 49 sind hier beispielhaft parallel verschaltet.

Zweckmäßig ist es, wenn außerdem die erwähnten Gehäusekomponenten der Verdichtungseinrichtung 140 über einen Kühlmittelstrom h von der Absorptionskältemaschine 32 gekühlt werden. Hierzu kann von der Absorptionskältemaschine 32 das Kühlmittel mittels einer Pumpe 33 zunächst über die zweite Kältespeichereinrichtung 30 geführt werden, um diese ggf. zu kühlen, und dann in den Kühlmittelstrom g der ersten Kältespeichereinrichtung 27 eingemischt bzw. zugemischt werden. Dies kann z.B. über das Bypassventil 44 erfolgen. Diese Verschaltung ist z.B. zur besseren Regulierung des Gesamtsystems, besonders im Teillastbetrieb vorteilhaft. Dementsprechend gibt es auch eine Aufteilungsmöglichkeit des Rücklaufs aus den Wärmetauschern 45, 46, 47, 48, 49, die durch das Ventil 55 geregelt werden kann.

Damit wird also die gesamte Abwärme der Zwischenstufenkühlung sowie der Zylindermantelkühlung (Gehäusekomponenten) und der Antriebskühlung durch die Absorptionskältemaschine 32 und die Expansionsmaschine 26 in nutzbare Kälte und nutzbare mechanische bzw. elektrische Energie umgewandelt.

Dabei ist es von besonderem Vorteil, das Temperaturniveau am Eingang der Absorptionskältemaschine 32 so hoch wie möglich zu halten, um höchste Effizienz zu erzielen. Daher führt der Rücklauf f des erwärmten Kühlmittels aus den Zwischenstufen direkt in die Eingangsseite, welche die hohe Temperatur aufweist. Mit der kalten Seite der Absorptionskältemaschine 32 hingegen wird die zweite Kältespeichereinrichtung 30 gekühlt bzw. kalt gehalten.

Prinzipiell können noch mehr Wärmetauscher in das dargestellte Schema eingebunden werden, wobei ein hohes Temperaturniveau wünschenswert, jedoch nicht zwingend erforderlich, ist.

Bei der Inbetriebnahme der Anlage 100 kann die Absorptionskältemaschine 32 z.B. durch elektrische Heizpatronen oder ein vergleichbares System temporär zwangsbeheizt werden, um die erste Kältespeichereinrichtung 27 abzukühlen. Hierzu kann, wenn die Kältespeichereinrichtung 27 z.B. über einen Wärmetauscher 35 in den Kühlmittelstrom e der Absorptionskältemaschine 32 angebunden, eine weitere (dritte) Heizwendel in den Wärmetauscher 35 mit z.B. elektrischer Beheizung integriert werden.

Die Abkühlung der zweite Kältespeichereinrichtung 30 kann bei der Inbetriebnahme der Anlage 100 durch Betankungen in bzw. von einem externen Speichertank (bevorzugt Typ II oder III) oder in eine Speicherbank oder mehrere Speicherbanken der Tankstelle bewerkstelligt werden.

Alle durch z.B. SAE, JPEC, ISO oder CEP (Clean Energy Partnership) definierten oder vergleichbaren Betankungsprotokolle können mit diesem gastechnischen und hydraulischen Verschaltungsschema bzw. der Anlage 100 bedient werden, da der kritische Fall mit -33 bis -40°C als Gas-Zieltemperatur durch das vorliegende Prinzip bereits abgedeckt wird und wärmere Betankungstemperaturen ebenfalls Anwendung finden.

## Patentansprüche

1. Anlage (100) zum Verdichten, Speichern und Bereitstellen von Gas, insbesondere Wasserstoff, aufweisend eine Verdichtungseinrichtung (140), eine Speichereinrichtung (120), eine Expansionsmaschine (26) und eine Kältemaschine (32), insbesondere eine Absorptionskältemaschine,
wobei die Anlage (100) eingerichtet ist, erhaltenes Gas (a) mittels der Verdichtungseinrichtung (140), insbesondere mehrstufig, zu verdichten, und das verdichtete Gas (b) in der Speichereinrichtung (120) zu speichern,
wobei die Anlage (100) eingerichtet ist, die Verdichtungseinrichtung (140) unter Verwendung der Kältemaschine (32) und der Expansionsmaschine (26) zu kühlen.

2. Anlage (100) nach Anspruch 1, weiterhin aufweisend eine erste Kältespeichereinrichtung (27), wobei die Anlage (100) eingerichtet ist, das gespeicherte Gas aus der Speichereinrichtung (120) über die Expansionsmaschine (26) und nachfolgend die erste Kältespeichereinrichtung (27) zu führen.

3. Anlage (100) nach Anspruch 2, die eingerichtet ist, eine oder mehrere Gehäusekomponenten der Verdichtungseinrichtung (140), insbesondere Einlässe für das Gas und/oder einen Antrieb (41), über einen Kühlmittelstrom (g) von der ersten Kältespeichereinrichtung (27) zu der einen oder den mehreren Gehäusekomponenten der Verdichtungseinrichtung (140) zu kühlen.

4. Anlage (100) nach einem der vorstehenden Ansprüche, weiterhin aufweisend: eine zweite Kältespeichereinrichtung (30), wobei die Anlage (100) eingerichtet ist, das gespeicherte Gas aus der Speichereinrichtung (120) direkt über die zweite Kältespeichereinrichtung (30) zu führen.

5. Anlage (100) nach Anspruch 4, die eingerichtet ist, die zweite Kältespeichereinrichtung (30) über einen Kühlmittelstrom von der Kältemaschine (32), insbesondere von einem kalten Ausgang der Kältemaschine, zu kühlen.

6. Anlage (100) nach Anspruch 4 oder 5, in Rückbezug zumindest auf Anspruch 1, die eingerichtet ist, das Gas mittels der ersten Kältespeichereinrichtung (27) auf eine andere, insbesondere geringere, mittlere Temperatur, zu kühlen als mittels der zweiten Kältespeichereinrichtung (30), und insbesondere Gasströme nach der ersten Kältespeichereinrichtung (27) und der zweiten Kältespeichereinrichtung (30) zu vermischen, um das Gas mit einer gewünschten Temperatur bereitzustellen.

7. Anlage (100) nach einem der Ansprüche 4 bis 6, in Rückbezug zumindest auf Anspruch 1, die eingerichtet ist, je nach Bedarf das gespeicherte Gas aus der Speichereinrichtung (120) wahlweise
- über die Expansionsmaschine (26) und nachfolgend die erste Kältespeichereinrichtung (27),
- direkt über die zweite Kältespeichereinrichtung (30), oder
- über die Expansionsmaschine (27) und nachfolgend die erste Kältespeichereinrichtung (27) und zudem direkt über die zweite Kältespeichereinrichtung (30),
zu führen und für eine Verwendung zur Verwendung bereitzustellen, insbesondere über eine Bereitstellungseinrichtung (31) der Anlage.

8. Anlage (100) nach einem der vorstehenden Ansprüche, in Rückbezug zumindest auf Anspruch 3, die eingerichtet ist, die eine oder die mehreren Gehäusekomponenten der Verdichtungseinrichtung (140) weiterhin über einen Kühlmittelstrom (h) von der Kältemaschine (32) zu kühlen, insbesondere durch Zumischung von Kühlmittel in den Kühlmittelstrom (g) der ersten Kältespeichereinrichtung (27), weiter insbesondere, in Rückbezug zumindest auf Anspruch 4, nach Kühlung der zweiten Kältespeichereinrichtung (30).

9. Anlage (100) nach einem der vorstehenden Ansprüche, wobei die Verdichtungseinrichtung (140) mehrere Verdichterstufen zum mehrstufigen Verdichten des Gases aufweist, und wobei die Anlage (100) eingerichtet ist, Gas zwischen zwei Verdichterstufen und/oder zwischen einer letzten Verdichterstufe und der Speichereinrichtung (120) über einen Kühlmittelstrom (e) der Kältemaschine (32) zu kühlen, der im Rücklauf (f) der Kältemaschine (32), insbesondere einem warmen Eingang der Kältemaschine, zugeführt wird.

10. Verfahren zum Betreiben einer Anlage (100) zum Verdichten, Speichern und Bereitstellen von Gas, insbesondere Wasserstoff, bei der erhaltenes Gas (a) mittels einer Verdichtungseinrichtung (140), insbesondere mehrstufig, verdichtet wird, und bei der das verdichtete Gas (b) in einer Speichereinrichtung (120) gespeichert wird,
wobei die Verdichtungseinrichtung (140) unter Verwendung einer Kältemaschine (32), insbesondere einer Absorptionskältemaschine (32), und einer Expansionsmaschine (26) gekühlt wird.

11. Verfahren nach Anspruch 10, wobei gespeichertes Gas aus der Speichereinrichtung (120) über die Expansionsmaschine (26) und nachfolgend eine erste Kältespeichereinrichtung (27) geführt wird, und wobei die Kältemaschine (32) bei einer Inbetriebnahme der Anlage (100) temporär zwangsbeheizt wird, um die erste Kältespeichereinrichtung (27) abzukühlen.

12. Verfahren nach Anspruch 10 oder 11, wobei gespeicherte Gas aus der Speichereinrichtung (120) direkt über eine zweite Kältespeichereinrichtung (30) geführt wird, und wobei die zweite Kältespeichereinrichtung (30) bei einer Inbetriebnahme der Anlage (100) durch Betankung in einem externen Speichertank oder der Speichereinrichtung abgekühlt wird.

13. Verfahren nach einem der Ansprüche 10 bis 12, zum Betreiben einer Anlage (100) nach einem der Ansprüche 1 bis 9.
